(19) Europäisches Patentamt
European Patent Office
Office européen des brevets

(11) Numéro de publication: **0 323 377 B1**

(12) **FASCICULE DE BREVET EUROPEEN**

(45) Date de publication de fascicule du brevet: **21.10.92**    (51) Int. Cl.⁵: **B01D 9/00**

(21) Numéro de dépôt: **88440106.8**

(22) Date de dépôt: **21.12.88**

(54) **Dispositif pour la purification de produits cristallisables.**

(30) Priorité: **29.12.87 FR 8718516**

(43) Date de publication de la demande:
**05.07.89 Bulletin  89/27**

(45) Mention de la délivrance du brevet:
**21.10.92 Bulletin  92/43**

(84) Etats contractants désignés:
**AT BE CH DE ES GB GR IT LI LU NL SE**

(56) Documents cités:
**FR-A- 775 415          FR-A- 2 493 172**
**FR-A- 2 515 328       GB-A- 509 289**
**GB-A- 803 933          US-A- 3 150 500**

(73) Titulaire: **BEFS TECHNOLOGIES S.A.**
**7, rue Gay-Lussac**
**F-68100 Mulhouse(FR)**

(72) Inventeur: **Lassiaz, Charles**
**1, rue de Panorama**
**F-68440 Zimmersheim(FR)**
Inventeur: **Schwartz, Gilbert**
**20, Impasse Montreville**
**F-54000 Nancy(FR)**

(74) Mandataire: **Aubertin, François**
**Cabinet Lepage & Aubertin Innovations et**
**Prestations 4, rue de Haguenau**
**F-67000 Strasbourg(FR)**

## Description

L'invention concerne un dispositif pour la purification de tout produit cristallisable, organique, minéral ou autre, comportant, essentiellement, un raffineur muni d'au moins un échangeur de chaleur à enceintes spiralées.

La présente invention concerne plus particulièrement les industries du génie chimique.

On connaît déjà, par le document FR-A-2.493.172, un procédé et appareil pour la purification de produits cristallisables quelle que soit leur nature, par exemple, minérale ou organique. Plus précisément, le procédé consiste à refroidir le produit à purifier selon un programme de température optimisé de manière à obtenir sa solidification et la formation de cristaux.

En fin de cristallisation, le liquide restant est séparé par gravité de la masse solide et constitue le rejet. A ce stade, l'ensemble des cristaux est mouillé par un film liquide de composition équivalente au rejet précédemment prélevé. De ce fait, cette première phase de cristallisation est suivie d'un réchauffement progressif provoquant la fonte partielle du produit cristallisé. Le liquide ainsi récupéré est renvoyé en tête de cycle de cristallisation et constitue le reflux. Après avoir refondu, selon le procédé ci-dessus 20 a 40 % de la masse cristalline initiale, le film liquide enveloppant cette dernière est d'une composition voisine de celle du cristal.

Par un procédé de chauffage rapide, on assure la fonte de la totalité des cristaux encore en présence et le mélange recueilli constitue la production. Ce cycle correspond à un cycle de "fusion fractionnée".

Selon le procédé exposé dans ce document antérieur, il est également possible d'opérer suivant un cycle de cristallisation fractionné. Ce cycle consiste, après une première phase de cristallisation, à provoquer la fonte d'une proportion limitée des cristaux formée, environ 5 à 10 %. La masse restante est ensuite refondue, puis complétée par une fraction liquide de même composition avant d'être cristallisée et à nouveau séparée du liquide. Le nombre de ces étages de cristallisation est, évidemment, fonction de la concentration en impureté du produit brut et du degré d'épuration à atteindre.

Le document cité ci-dessus est également relatif à un appareil intervenant dans ce procédé de purification de produits cristallisables. Plus précisément, l'élément essentiel de cet appareil est un raffineur. Celui-ci peut comporter un ou plusieurs étages utilisés, soit en parallèle, soit en série. Chaque étage correspond à un module pourvu d'une enceinte munie dans sa partie interne d'un équipement de transfert et de diffusion de chaleur. Ce dernier est traversé par un fluide caloporteur dont la circulation est assurée par une station thermique, externe au raffineur, cette station thermique étant dotée des moyens nécessaires de chauffage et de refroidissement du fluide.

Plus exactement, le raffineur se compose, essentiellement, d'un corps d'échange cylindrique composé d'un certain nombre d'étages de traitement superposés et traversés par un faisceau de tubes destinés à la circulation du fluide de transfert. Ce corps d'échange est, en outre, enrobé d'un second faisceau de tubes externes ayant pour orifice de rendre l'appareil isotherme.

Il est, en effet, indispensable d'éviter les gradients de température à l'intérieur du corps d'échange pour garantir l'efficacité de la cristallisation et permettre son contrôle.

Les différents étages de traitement sont séparés les uns des autres par des moyens de drainage horizontaux permettant d'évacuer le liquide produit au cours des étapes de cristallisation.

Par ailleurs, pour favoriser le transfert de chaleur entre le produit à purifier et le fluide de transfert circulant dans les faisceaux de tubes, le corps d'échange est équipé de diffuseurs. Ceux-ci sont constitués par un réseau de tôles associé aux faisceaux de tubes internes et assurant une meilleure répartition des calories dans le milieu liquide ou cristallin que constitue le produit à purifier. Ces tôles contribuent, en outre, au drainage vertical lors de la séparation liquide et solide après cristallisation.

Ce type d'appareil connu pour le traitement de produits cristallisables présente un certain nombre d'inconvénients, notamment, dans le cadre d'une utilisation pour des produits à faible concentration d'impuretés.

La plupart de ces inconvénients sont liés essentiellement à la structure spécifique de l'appareil, celle-ci n'étant pas adaptée pour satisfaire aux impératifs de traitement poussé par cristallisation.

Ainsi, il y a lieu de constater que le débit de fluide caloporteur traversant les différents étages du corps d'échange devient très important dans des situations décrites ci-dessus, ce débit étant nécessaire pour éviter, autant que possible, les gradients de température dans le milieu liquide ou le réseau cristallin du produit à traiter. Ceci entraîne, nécessairement, une nette augmentation de la consommation d'énergie.

Par ailleurs, les diffuseurs de chaleur internes, constitués par un réseau de tôles, présentent une efficacité amoindrie en présence d'un produit à traiter constituant, au départ, une matière première riche. Cette défaillance se répercute, indéniablement, sur le fonctionnement en parallèle des différents modules qui deviennent, difficilement, maîtrisables.

De plus, malgré la conception modulaire des étages du raffineur, celui-ci ne peut être adapté qu'à une gamme de produits donnés et satisfaire à des paramètres de production déterminés. On remarque, en effet, que les différents étages ou modules sont indissociables les uns des autres et l'addition d'un étage supplémentaire ne peut se faire qu'en modifiant fondamentalement la structure du raffineur.

D'une manière générale, la conception d'un échangeur thermique est déterminante quant, à ses performances en cours de fonctionnement. Ainsi, les échangenrs tubulaires, malgré leur utilisation particulièrement répandue, ne peuvent être appliqués à toutes les situations en raison de leur efficacité limitée.

A cet effet, on a conçu des échangeurs de chaleur, tels que décrits dans le document FR-A-2.283.742, dont les deux enceintes destinées à la circulation des fluides sont enroulées en spirale autour d'un même axe.

Plus exactement, ces échangeurs de chaleur sont réalisés à partir de tôles enroulées en spirale et maintenues écartées soit par des entretoises, soit en raison de la présence d'inégalités de surfaces sur lesdites tôles.

Par ailleurs, l'une des enceintes, délimitées par ces tôles, est fermée à sa partie supérieure et inférieure autorisant la circulation d'un premier fluide d'échange.

L'autre fluide d'échange peut, quant à lui, traverser librement le faisceau spiralé.

Ces échangeurs de chaleur présentent, non seulement, l'avantage d'être d'une réalisation aisée, mais permettent, en outre, d'augmenter considérablement la surface d'échange entre les différents fluides.

Toutefois, ils ne s'adaptent que difficilement dans le cadre d'un procédé de traitement par cristallisation et comportent, de ce fait, plusieurs inconvénients.

En effet, le fluide de transfert, véhiculé, en général, dans l'enceinte à circuits spiralés, doit être évacué, nécessairement, au centre du raffineur. Ainsi, cette disposition ne peut offrir la possibilité de modifier le sens de circulation du fluide thermique. Il en résulte la naissance d'un gradient de température entre l'intérieur et l'extérieur de l'échangeur, paramètre nuisible à une bonne cristallisation.

Par ailleurs, ces échangeurs de chaleur spiralés ne s'apprêtent pas à la réalisation d'un appareil parfaitement modulable et composé d'un nombre d'étages variable utilisés soit en série, soit en parallèle.

D'autres inconvénients sont dûs à la structure particulière des échangeurs connus, celle-ci étant inadaptée à un procédé de cristallisation.

La présente invention a pour but de remédier à l'ensemble des inconvénients précités. L'invention, telle qu'elle est caractérisée dans les revendications, résout le problème consistant à créer un dispositif pour la purification de tout produit cristallisable, organique, minéral ou autre, comportant, essentiellement, un raffineur muni d'au moins un échangeur de chaleur à enceintes spiralées, chacun de ces échangeurs de chaleur constituant un module et se présentant sous forme d'une double spirale obtenue par deux tôles enroulées de manière à présenter leurs extrémités verticales disposées, selon des génératrices, au niveau de l'enveloppe externe de l'échangeur de chaleur et constituant des ouvertures correspondant à l'une des enceintes spiralée et coopérant avec des moyens d'alimentation et/ou d'évacuation en fluide de transfert situés à l'extérieur de cet échangeur de chaleur et formés par des tubulures verticales, chacun de ces modules comportant, en outre, des moyens de connexion permettant de les superposer tout en conservant leur autonomie quant aux entrées et sorties des produits cristallisables, ces moyens de connexion étant constitués par la face supérieure et la face inférieure des echangeurs de chaleur présentant une forme conique pour faciliter le centrage d'un module par rapport à un autre lors de leur assemblage, ladite face inférieure étant pourvue d'un fond de forme conique comportant un rebord périphérique pourvu d'une ouverture communiquant avec une tubulure à travers laquelle s'effectuent l'alimentation, le drainage et la vidange dudit module.

Les avantages obtenus grâce à cette invention consistent essentiellement en ce que les différents modules sont empilables par simple assemblage mécanique et leur nombre peut être variable et choisi suivant la puissance des unités ou tout autre critère. Le dispositif, ainsi conçu, est aisément modulable en fonction de la nature des produits cristallisables. Cependant, ces modules restent autonomes en ce qui concerne les entrées et les sorties des produits à traiter. Ceci leur confère, d'une part, une efficacité améliorée et, d'autre part, une grande souplesse de fonctionnement.

L'invention est exposée, ci-après, plus en détail à l'aide de dessins représentant seulement un mode d'exécution.

La figure 1 représente une vue schématisée en élévation et en coupe partielle, d'un dispositif conforme à la présente invention.

La figure 2 représente une vue schématisée éclatée et en perspective, d'un module du dispositif.

La figure 3 représente une vue schématisée et en coupe selon III-III de la figure 1.

La figure 4 représente une vue schématisée, en élévation et en coupe, d'un module du dispositif.

La figure 5 représente une vue schématisée et en plan du fond d'un module.

La figure 6 représente une vue schématisée et en plan d'un bouclier thermique disposé au-dessus et en-dessous d'un module.

La figure 7 représente, schématiquement et en plan, le fond d'un module reposant sur un bouclier thermique.

Les figures 8 à 11 représentent partiellement et en coupe une spire d'un échangeur de chaleur spiralé conforme à l'invention.

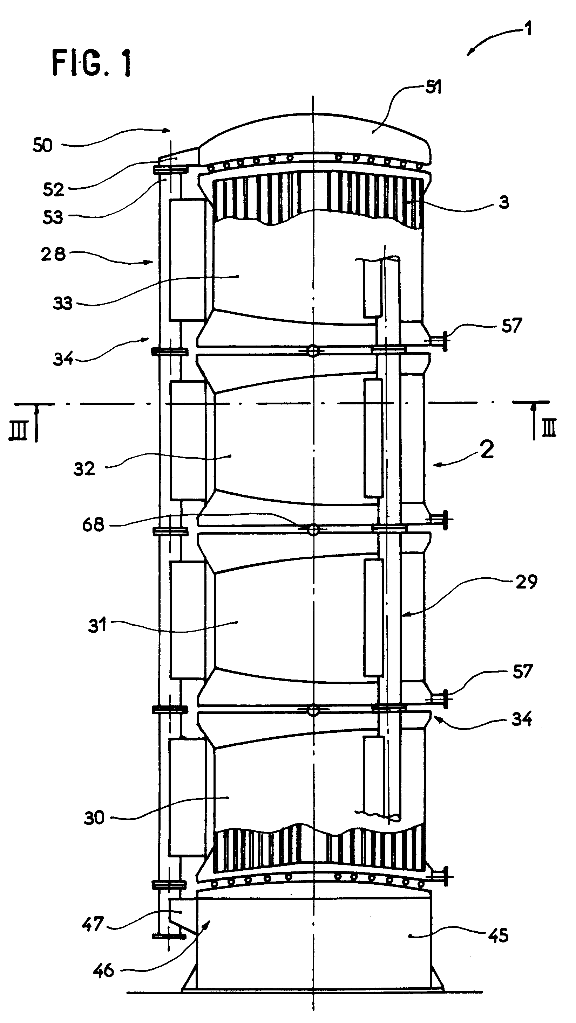

On se réfère plus particulièrement aux figures 1 à 4.

Le dispositif 1, représenté dans la figure 1 et faisant l'objet de la présente invention, est plus particulièrement destiné au traitement de produits cristallisables qu'ils soient organiques, minéraux, aqueux ou autres.

Ainsi, ce dispositif 1 est composé, essentiellement, d'un raffineur 2 comportant au moins un échangeur de chaleur 3 dans lequel circule, d'une part, un fluide de transfert relié, par des conduites appropriées, à une station thermique (non représentée). Cette dernière est pourvue des éléments nécessaires de chauffage et de refroidissement du fluide de transfert. D'autre part, l'échangeur de chaleur 3 est destiné à contenir le produit cristallisable à traiter.

Avantageusement, l'échangeur de chaleur 3 est due type à enceintes spiralées permettant d'améliorer considérablement le rendement de la cristallisation en raison d'une surface d'échange plus importante. De tels échangeurs de chaleur contribuent, par ailleurs, à la réduction des difficultés de conception du dispositif 1.

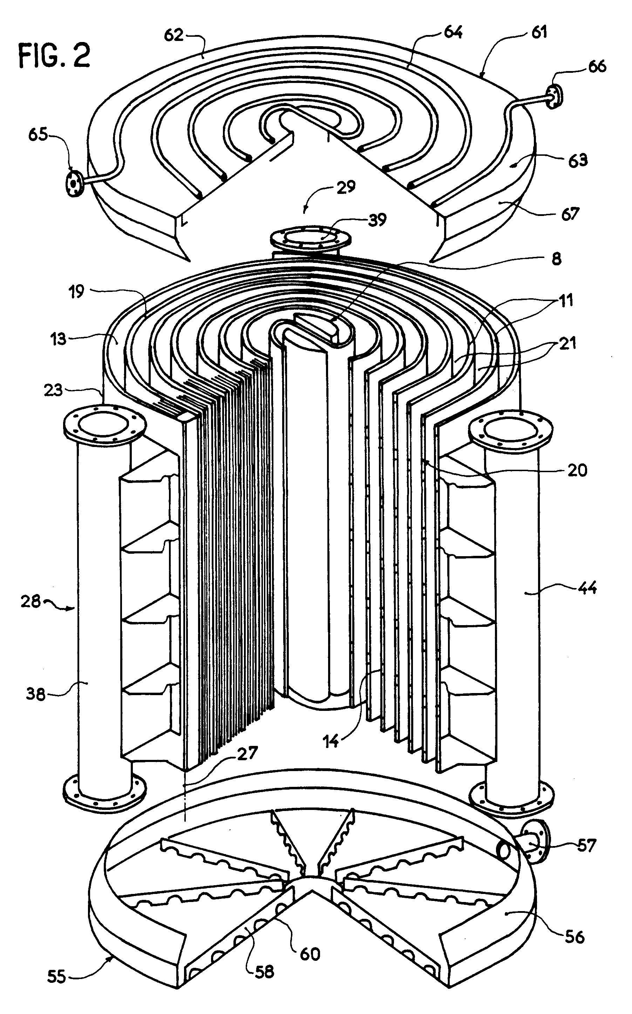

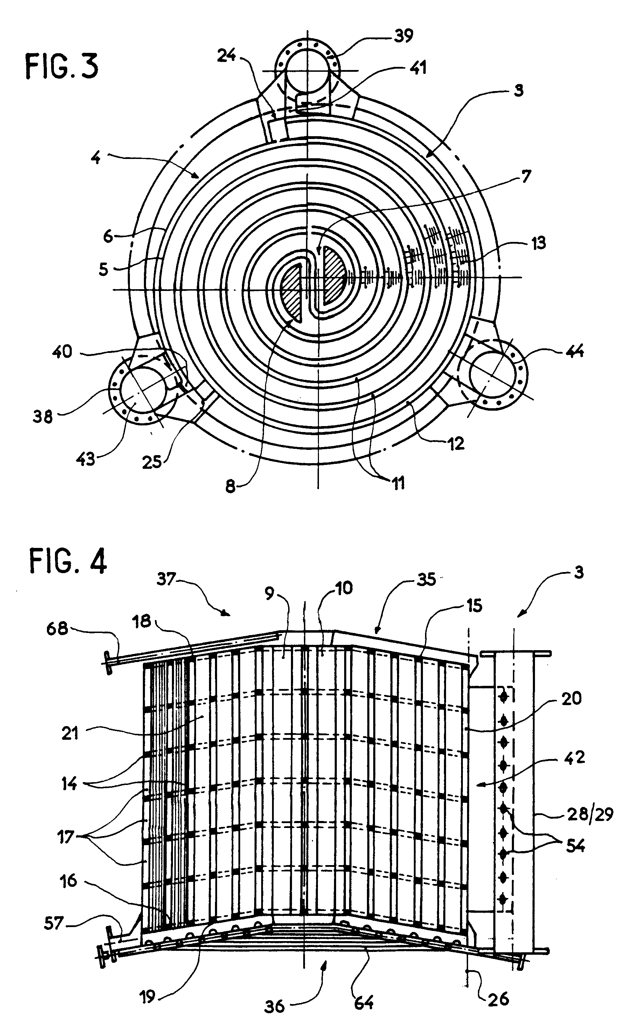

Selon un mode de réalisation préférentiel, l'échangeur de chaleur 3 est formé par une double spirale 4 plus particulièrement visible dans les figures 2 et 3. Cette double spirale 4 est, plus précisément, obtenue par l'intermédiaire de deux tôles 5, 6 préalablement insérées au niveau de leur partie médiane 7 dans un noyau central 8 composé de deux éléments hémicylindriques 9, 10. En conférant à ce même noyau central 8 une rotation, les tôles 5, 6 viennent à s'enrouler autour des deux éléments hémicylindriques 9, 10 et donnent naissance à la double spirale 4 précitée.

Au cours de cet enroulement, il est indispensable de maintenir un écartement, d'une part, entre les deux tôles 5, 6 et, d'autre part, entre les différentes spires 11 en cours de formation, ceci pour définir un premier canal 12 servant à la circulation du fluide de transfert et un second canal 13 correspondant à l'espace dans lequel est introduit le produit à purifier.

A cet effet, et selon une caractéristique de l'invention, on insère entre les deux tôles 5, 6, avant enroulement, une série de plats 14, 15, 16 répartis sur toute la hauteur desdites tôles 5, 6 et s'étendant, horizontalement, sur toute la longueur de ces dernières. Ces plats 14, 15, 16 permettant de définir une série de canaux 17 dans lesquels circule le fluide de transfert. Avantageusement, les plats supérieur 15 et inférieur 16 situés, respectivement, à l'extrémité supérieure 18 et inférieure 19 des tôles 5, 6 sont rapportés à ces dernières par soudure ou autre moyen de fixation étanche. On obtient, ainsi, une première enceinte étanche 20 en forme d'une double spirale et indépendante de la seconde enceinte 21 de l'échangeur de chaleur 3.

Par ailleurs, au moins une des tôles 5, 6 est pourvue d'une série d'entretoises 22 ou équivalent permettant de maintenir l'écartement entre les spires 11 lors de l'enroulement. La nature et la forme des entretoises 22 seront reprises plus en détail dans la suite de la description.

Cette conception particulière de l'échangeur de chaleur 3, formé par une double spirale 4, offre la possibilité d'alimenter et d'évacuer le fluide de transfert, véhiculé dans l'enceinte 20, au niveau de d'enveloppe externe 23 dudit échangeur de chaleur 3. Les extrémités verticales 24, 25 des tôles 5, 6 définissant les deux ouvertures 40, 41 de l'enceinte spiralée 20, sont disposées selon des génératrices 26, 27 de ladite enveloppe 23. Ceci permet non seulement l'implantation de moyens d'alimentation et/ou d'évacuation 28, 29 en périphérie de l'échangeur de chaleur 3 mais autorise, en outre, une inversion cyclique du flux du fluide de transfert au cours de la cristallisation.

Selon une autre caractéristique de l'invention, le raffineur 2 peut être composé d'un nombre variable de modules 30, 31, 32, 33 correspondant aux différents étages de la cristallisation utilisés soit en parallèle, soit en série. A titre d'exemple, la figure 1 représente un dispositif 1 comportant quatre modules. Toutefois, en raison des particularités de la présente invention, il est possible soit d'additionner, soit de soustraire un ou plusieurs modules à ce même dispositif 1.

Ainsi, chacun de ces modules 30, 31, 32, 33 est constitué par un échangeur de chaleur du type spiralé 3 et comporte des moyens de connexion 34 permettant de superposer lesdits modules par une simple opération d'assemblage tout en conservant leur autonomie au niveau de leur alimentation et évacuation en produit cristallisable.

Plus précisément, ces moyens de connexion 34 sont constitués, dans un premier temps, par une structure particulière des différents échangeurs de chaleur facilitant leur emboîtement. Notamment, lors de l'enroulement des tôles 5, 6 autour du noyau central 8, il est appliqué à ce dernier un mouvement sensiblement hélicoïdal permettant de conférer à la face supérieure 35 et la face inférieure 36 de l'échangeur de chaleur 3 une forme conique 37. Cette morphologie spécifique facilite le centrage d'un module par rapport à un autre lors de leur superposition.

Lesdits moyens de connexion 34 consistent, en un second lieu, en une structure spécifique des moyens d'alimentation et/ou d'évacuation 28, 29 en fluide de transfert de l'enceinte spiralée 20. Il a été cité plus haut dans la description que ces moyens d'alimentation et/ou d'évacuation 28, 29 sont disposés sur le pourtour de l'enveloppe 23 de l'échangeur de chaleur 3. Cependant, pour faciliter l'assemblage des différents modules, il est avantageux que leurs moyens d'alimentation et/ou d'évacuation 28, 29 respectifs puissent être connectés entre eux pour, finalement, les relier, par des conduites communes, à une même station thermique (non représentée).

Ainsi, selon un mode de réalisation préférentiel, lesdits moyens d'alimentation et/ou d'évacuatio 28, 29 d'un module 30, 31, 32, 33 sont constitués par deux tubulures verticales 38, 39 disposées parallèlement aux ouvertures, respectivement, 40, 41 de l'enceinte spiralée 20. Des moyens de raccordement 42 permettent de relier lesdites ouvertures 40, 41 à la partie interne 43 des tubulures 38, 39 dans lesquelles circule le fluide de tranfert. Ces modules 30, 31, 32, 33 comportent, en outre, une troisième tubulure 44 raccordée verticalement à l'enveloppe 23 de l'échangeur de chaleur 3 et dont l'utilité sera précisée ultérieurement dans la description.

Avantageusement, le trois tubulures 38, 39, 44 sont réparties également sur le pourtour de chacun des modules 30, 31, 32, 33, d'une part, pour faciliter le raccordement entre ces derniers et, d'autre part, pour constituer, après assemblage, trois tirants s'étendant sensiblement sur toute la hauteur du dispositif 1 pour maintenir ce dernier assemblé. A ce propos, il convient de noter qu'en raison de la circulation du fluide de transfert à l'intérieur des tubulures 38, 39, 44, celles-ci sont à une température sensiblement équivalente aux échangeurs de chaleur 3. De ce fait, les contraintes verticales dûes aux dilatations sont annulées.

Le premier module 30, situé en bas du dispositif 1, repose sur un support 45 de diamètre sensiblement identique et comportant, à proximité de son bord supérieur 46, trois membrures tubulaires 47 raccordées aux tubulures 38, 39, 44 et constituant les alimentations et/ou évacuations de ces dernières en fluide de transfert.

Par ailleurs, le dispositif 1 comporte, dans sa partie supérieure 50, un couvercle 51 venant recouvrir le dernier module 33. Avantageusement, ce couvercle 51 est muni de moyens 52 permettant d'obturer à leur extrémité supérieure 53 les tubulures 38, 39, 44 du module 33.

Il a été cité plus haut qu'en raison de la conception spécifique de l'échangeur de chaleur 3, l'enceinte spiralée 20 est compartimentée en plusieurs canaux 17. De ce fait, il est nécessaire d'effectuer une parfaite répartition du fluide de transfert provenant de la tubulure 38 ou 39 dans ladite enceinte spiralée 20. Avantageusement, cette répartition est assurée par l'intermédiaire, d'une part, des moyens de raccordement 42 et, d'autre part, d'une série de perforations 54 disposées sensiblement sur toute la longueur des tubulures 38, 39 de manière à concorder avec la hauteur de l'échangeur de chaleur 3 et les canaux 17. Cette particularité permet d'améliorer le rendement de la cristallisation en évitant les gradients ded température à l'intérieur des différents modules 30, 31, 32, 33.

Le produit cristallisable est, quant à lui, introduit dans la seconde enceinte 21 depuis le bas de chacun de ces modules 30, 31, 32, 33. A cet effet, ces derniers comportent un fond 55 rendu solidaire de manière étanche de la face inférieure 36 de l'échangeur de chaleur 3. Ce fond 55, de forme conique, adapté à ladite face inférieure 36 a pour intérêt, d'une part, d'assurer la répartition du produit cristallisable dans l'enceinte 21 lors du chargement du module et, d'autre part, de faciliter l'évacuation des différentes phases liquides s'écoulant au cours du procédé.

A cet effet, le fond 55 comporte au niveau de son rebord périphérique 56 une ouverture communiquant avec une tubulure 57 au travers de laquelle sont effectués l'alimentation, le drainage et la vidange du module. A noter, par ailleurs, la présence de nervures 58 disposées radialement sur la face interne 59 du fond 55 et sur lesquelles reposent les tôles spiralées 5, 6. L'intérêt de telles nervures 58 consiste à améliorer la répartition et l'evacuation du produit cristallisable contenu entre les différentes spires de l'enceinte 21 et, dans ce même but, elles sont écrêtées sur leur chant inférieur 60.

Selon une autre caractéristique de la présente invention, le dispositif 1 comporte, entre chaque module 30, 31, 32, 33, un bouclier thermique 61 avant un double intérêt, à savoir éviter les gradients thermiques au niveau de la face supérieure 35 ou inférieure 36 de l'échangeur de chaleur 3 et, d'autre part, faciliter le drainage du liquide s'écoulant sur le fond 55 d'un module situé immédiatement au-dessus. Avantageusement, on dispose également un tel bouclier thermique 61 en-dessous du premier module 30 situé en bas du dispositif 1 et au-dessus du dernier module 33 constituant l'étage supérieur du raffineur 2.

Selon un mode de réalisation préférentiel, ces boucliers thermiques 61 sont constitués par un couvercle 62 de forme conique appliqué sur la face supérieure 35 de l'échangeur de chaleur 3 ou du support 45. Ce couvercle 62 est équipé, sur sa face supérieure 63, d'un serpentin 64 empruntant la forme de double spirale 4 dudit échangeur de chaleur 3. Cette disposition est indispensable pour autoriser l'alimentation et/ou l'évacuation en fluide de transfert de ce serpentin 64 au niveau de l'enveloppe 23 d'un module. A ce propos, il a été cité plus haut que ce dernier comporte une troisième tubulure 44 identique aux tubulures 38, 39 assurant l'alimentation et/ou l'évacuation en fluide de transfert de l'enceinte spiralée 20. En fait, cette troisième tubulure 44 est connectée à l'une des extrémités 65 de chaque serpentin 64 et assure l'alimentation et/ou l'évacuation de ce dernier en fluide de transfert. L'autre extrémité 66 dudit serpentin 64 est reliée par une conduite annexe (non représentée) à la station thermique.

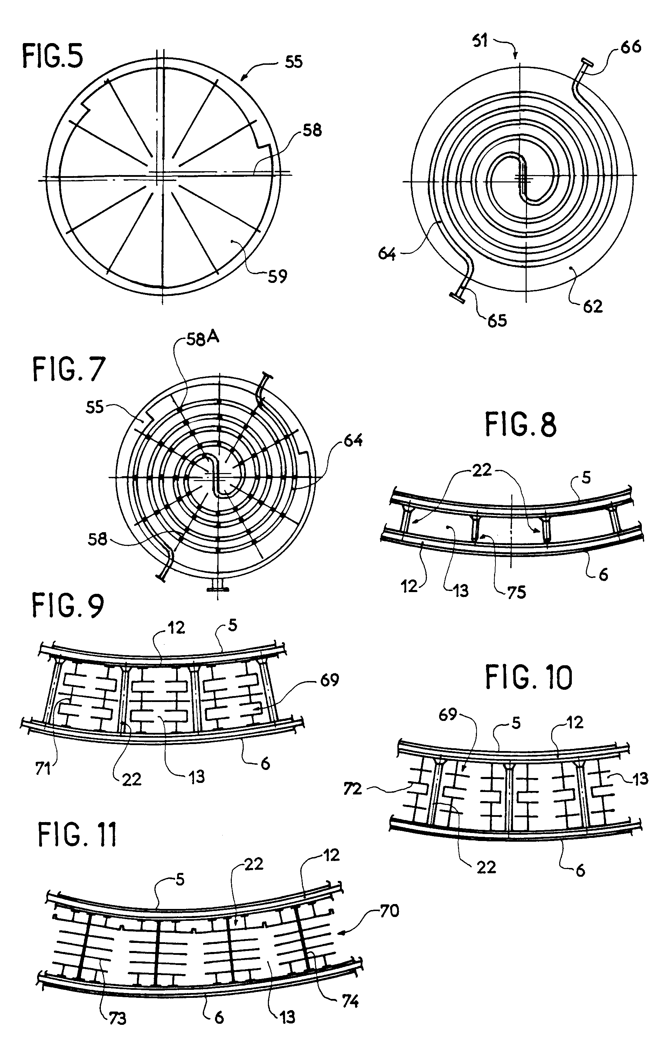

La figure 7 représente schématiquement la superposition du fond 55 d'un module et d'un bouclier thermique 61. Plus précisément, la référence 58A sur cette figure désigne les points d'intersection entre les nervures 58 et le serpentin 64. Ceci permet de faire remarquer l'intérêt en tant que diffuseur que présentent lesdites nervures 58.

Préférentiellement, le couvercle 62 est scellé de manière étanche sur la face supérieure 35 de l'échangeur de chaleur 3. Cependant, dans ces conditions, il est indispensable de munir le rebord périphérique 67 de ce couvercle 62 d'un évent 68.

L'ensemble des caractéristiques du dispositif 1 pour le traitement de produits cristallisables, tels que décrits ci-dessus, permet d'obtenir un appareil d'une grande efficacité et d'une souplesse incomparable. Toutefois, ces qualités peuvent être améliorées en augmentant le transfert de chaleur entre les enceintes 20 et 21 de l'échangeur de chaleur 3.

Avantageusement, ce but peut être atteint soit par l'adjonction de diffuseurs 69 entre les entretoises 22 assurant l'écartement des spires 11, soit en utilisant des éléments 70 remplissant simultanément la fonction de diffuseur et d'entretoise.

Les figures 9 à 11 représentent trois modes de réalisation distincts dans lesquels un effet de paroi permet d'améliorer le transfert de chaleur entre le canal 12 contenant le fluide de transfert et le milieu du produit cristallisable. Plus précisément, selon le mode de réalisation représenté dans la figure 9, on dispose entre les différentes rangées d'entretoises 22 des profilés 71 spécialement conçus pour leur rôle thermique et dont l'élasticité est suffisante pour épouser la forme des tôles 5, 6 sans jouer aucun rôle mécanique.

Il est également possible, tel que représenté dans la figure 10, d'utiliser des profilés 72 de forme spécifique dont le maintien dans l'enceinte 21 est assuré par pincement entre les entroises 22 standards et les tôles 5, 6 spiralées.

La figure 11 correspond à une solution mixte dans laquelle il a été procédé à la combinaison de la fonction entretoise et diffuseur. Notamment, le profilé diffuseur 73 utilisé, présente une âme centrale 74 de rigidité suffisante pour maintenir l'écartement entre les différentes spires 11 d'un échangeur de chaleur 3.

Bien entendu, la nature et la forme des profilés 71, 72, 73 peuvent varier en fonction de l'espace libre du canal 13 et de la nature des produits à traiter, en particulier, de leur coefficient de transfert de masse lié au coefficent de diffusion et aux propriétés rhéologiques du système.

L'intérêt de garnir l'espace réservé aux produits à cristalliser par des diffuseurs thermiques 69 intervient essentiellement dans le cadre de la cristallisation de produits organiques. En effet, ces diffuseurs thermiques permettent, d'une part, d'assurer l'homogénéité du réseau cristallin et, d'autre part, de réduire sensiblement les écarts de température liés aux paramètres de vitesse de formation des cristaux.

Pour d'autres applications, par exemple dans l'industrie agro-alimentaire, il est indispensable de concevoir des échangeurs de chaleur et, d'une manière générale, des réacteurs dont le nettoyage soit facilité. Notamment, il est indispensable que chaque espace soit accessible pour assurer cette opération. A cet effet, on confère aux entretoises 22, soudées sur l'une des tôles 6, une extrémité conique 75 n'assurant qu'un contact ponctuel entre cette dernière et la tôle 5.

## Revendications

1. Dispositif (1) pour la purification de tout produit cristallisable organique, minéral, aqueux ou autre, comportant, essentiellement, un raffineur (2) muni d'un ou de plusieurs échangeurs de chaleur (3) à enceintes spiralées (20, 21), dispositif (1) caractérisé par le fait que chacun desdits échangeurs de chaleur (3) constitue un module (30, 31, 32, 33) et se présente sous forme d'une double spirale (4) obtenue par deux tôles (5, 6) enroulées de manière à présenter leur extrémités verticales (24, 25) disposées, selon des génératrices (26, 27) au niveau de l'enveloppe externe (23) de l'échangeur de chaleur (3) et constituant des ouvertures (40, 41) correspondant à l'une des enceintes spiralée (20) et coopérant avec des moyens d'alimentation et/ou d'évacuation (28, 29) en fluide de transfert situés à l'extérieur de cet échangeur de chaleur (3) et formés par des tubulures verticales (38, 39), chacun de ces modules (30, 31, 32, 33) comportant, en outre, des moyens de connexion (34) permettant de les superposer tout en conservant leur autonomie quant aux entrées et sorties de produits cristallisables, ces moyens de connexion (34) étant constitués par la face supérieure (35) et la face inférieure (36) des échangeurs de chaleur (3) présentant une forme conique (37) pour faciliter le centrage d'un module par rapport à un autre lors de leur assemblage, ladite face inférieure (36) étant pourvue d'un fond (55) de forme conique comportant un rebord périphérique (56) pourvu d'une ouverture communiquant avec une tubulure (57) à travers laquelle s'effectuent l'alimentation, le drainage et la vidange dudit module (30, 31, 32, 33).

2. Dispositif (1) selon la revendication 1, caractérisé par le fait que les deux tôles (5, 6) constituant la double spirale (4), sont insérées au niveau de leur partie médiane (7) dans un noyau central (8) composé de deux éléments hémicylindriques (9, 10), lesdites tôles (5, 6) étant enroulées autour de ces derniers.

3. Dispositif 1 selon la revendication 2, caractérisé, par le fait que les tôles (5, 6) sont maintenues écartées l'une par rapport a l'autre par des plats (14, 15, 16) insérés en leur milieu avant enroulement autour du noyau (8) lesdits plats (14, 15, 16) s'étendant horizontalement sur toute la longueur des tôles (5, 6) et étant répartis sur la hauteur de ces dernières de manière a définir dans l'enceinte (20) une série de canaux (17) dans lesquels circule un fluide de transfert.

4. Dispositif selon les revendications 1 et 3, caractérisé par le fait que les tubulures (38, 39) coopèrent avec les ouvertures (40, 41) de l'enceinte spiralée (20) par l'intermédiaire de moyens de raccordement (42) et comportent une série de perforations (54) disposées sensiblement sur toute leur longueur et concordant avec les canaux (17) de ladite enceinte (20) pour répartir le fluide et le transfert dans cette dernière.

5. Dispositif selon la revendication 1, caractérisé par le fait que le fond (55) est garni, sur sa face interne (59), de nervures (58) sur lesquelles reposent les tôles spiralées (5, 6), ces nervures (58) étant écrêtées sur leur chant inférieur (60) pour améliorer le drainage du liquide s'écoulant d'un module (30, 31, 32, 33).

6. Dispositif selon la revendication 1, caractérisé par le fait que le premier module (30), situé au bas du dispositif (1), repose sur un support (45) comportant à proximité de son bord supérieur (46) trois membrures tubulaires (47) raccordées aux tubulures (38, 39) ainsi qu'à une troisième tubulure (44) et constituant les alimentations et/ou évacuations des modules (30, 31, 32, 33) en fluide de transfert.

7. Dispositif selon la revendication 1, caractérisé par le fait qu'il comporte dans sa partie supérieure (50) un couvercle (51) venant recouvrir le dernier module (33), ce couvercle (51) étant muni de moyens (52) pour obturer les extrémités supérieures (53) des tubulures (38, 39, 44) dudit module (33).

8. Dispositif selon la revendication 1, caractérisé par le fait qu'il comporte un bouclier thermique (61) disposé, d'une part, entre chaque module (30, 31, 32, 33) et, d'autre part, en-dessous et au-dessus des modules (30, 33) situés respectivement, en bas et en haut du dispositif (1).

9. Dispositif selon la revendication 8, caractérisé par le fait qu'un bouclier thermique (61) est composé, d'une part, d'un couvercle (62) de forme conique appliqué sur la face supérieure (35) d'un échangeur de chaleur (3) ou sur le support (45) et, d'autre part, d'un serpentin (64) en forme de double spirale 4 disposé sur la face supérieure (63) dudit couvercle (62), ce dernier comportant, en outre, un rebord périphérique (67) traversé par un évent (68).

10. Dispositif selon la revendication 9, caractérisé par le fait que l'une des extrémités (65) du serpentin (64) est connectée à la tubulure (44) d'un module (30, 31, 32, 33), ladite tubulure (44) constituant l'alimentation et/ou l'évacuation en fluide de transfert.

11. Dispositif selon la revendication 1, caractérisé par le fait que l'enceinte (21) de l'échangeur de chaleur (3), obtenue en maintenant écartées, par l'intermédiaire d'entretoises (22) ou équivalent, les différentes spires (11) constituées par les tôles (5, 6), est garnie de diffuseurs (69) formés par des profilés (71, 72, 73) choisis pour leur rôle thermique.

12. Dispositif selon la revendication 11, caractérisé par le fait que les profilés (73), formant les diffuseurs (69), comportent une âme centrale (74) de rigidité suffisante pour remplir la fonction d'entretoise et maintenir les différentes spires (11) écartées.

**Claims**

1. Apparatus (1) for the purification of any organic, mineral, aquous or the like crystallisable product, mainly including a refiner (2) provided with one or several heat exchangers (3) with helical chambers (20, 21), apparatus (1) characterized in that each of said heat exchangers (3) forms a module (30, 31, 32, 33) and has the shape of a double spiral (4) obtained by means of two sheets (5, 6) wound up so that their vertical ends (24, 25) are arranged according to generating lines (26, 27) at the level of the outer shell (23) of the heat exchanger (3) and form openings (40, 41) corresponding to one of the helical chambers (20) and co-operate with means (28, 29) for feeding and/or draining transfer fluid located outside this heat exchanger (3) and formed by vertical sleeves 38, 39), each of these modules (30, 31, 32, 33) furthermore including connecting means (34) allowing to superpose same while maintaining their autonomy as regards the crystallisable-product inlets and outlets, these connecting means (34) being formed by the upper face (35) and the lower face (36) of the heat exchangers (3) having a conical shape (37) in order to facilitate the centering of one module with respect to another during their assembling, said lower face (36) being provided with a conically shaped bottom (55) including a peripheral rim (56) provided with an opening communicating with a sleeve (57) through which occur the feeding, the draining and the emptying of said module (30, 31, 32, 33).

2. Apparatus (1) according to claim 1, characterized in that both sheets (5, 6) forming the double spiral (4) are inserted at the level of their median portion (7) into a central core (8) comprised of two semicylindrical components (8, 10), said sheets (5, 6) being wound up about these latter.

3. Apparatus (1) according to claim 2, characterized in that the sheets (5, 6) are kept spaced apart from each other by flat irons (14, 15, 16) inserted between them before winding up about the core (8), said flat irons (14, 15, 16) horizontally extending over the full length of the sheets (5, 6) and being distributed over the height of these latter so as to define, within the chamber (20), a series of channels (17) through which flows a transfer fluid.

4. Apparatus according to claims 1 and 3, characterized in that the sleeves (38, 39) co-operate with the openings (40, 41) of the helical chamber (20) through connecting means (42) and include a series of perforations (54) arranged substantially over their full length and concording with the channels (17) of said chamber (20), in order to distribute the fluid and the transfer throughout this latter.

5. Apparatus according to claim 1, characterized in that the bottom (55) is provided, on its inner face (59), with ribs (58) on which rest the helical sheets (5, 6), these ribs (58) being notched at their lower edge (60) in order to improve the draining of the liquid flowing out of a module (30, 31, 32, 33).

6. Apparatus according to claim 1, characterized in that the first module (30) located at the bottom of the apparatus (1) rests on a stand (45) including, near to its upper edge (46), three tubular ribs (47) connected to the sleeves (38, 39) as well as to a third sleeve (44) and forming the transfer-fluid inlets and/or outlets of the modules (30, 31, 32, 33).

7. Apparatus according to claim 1, characterized in that it includes, at its upper portion (50), a cover (51) covering the last module (33), the cover (51) being provided with means (52) for obturating the upper ends (53) of the sleeves (38, 39, 444) of said module (33).

8. Apparatus according to claim 1, characterized in that it includes a thermal shield (61) arranged, on the one hand, between each module (30, 31, 32, 33) and, on the other hand, below and above the modules (30, 33) located at the bottom and the top of the apparatus (1), respectively.

9. Apparatus according to claim 8, characterized in that a thermal shield (61) is comprised of, on the one hand, a conically shaped cover (62) applied onto the upper face (35) of a heat echanger (3) or onto the stand (45) and, on the other hand, a coiled pipe (64) in the shape of a double spiral (4) arranged on the upper face (63) of said cover (62), this latter furthermore including a peripheral rim (67) through which passes a vent (68).

10. Apparatus according to claim 9, characterized in that one end (65) of the coiled pipe (64) is connected to the sleeve (44) of a module (30, 31, 32, 33), said sleeve (44) forming the transfer-fluid inlet and/or outlet.

11. Apparatus according to claim 1, characterized in that the chamber (21) of the heat exchanger (3), obtained by keeping the various spires (11) formed by the sheets (5, 6) spaced apart by means of spacers (22) or the like, is provided with diffusers (69) formed by profiles (71, 72, 73) selected for their thermal character.

**12.** Apparatus according to claim 11, characterized in that the profiles (73) forming the diffusers (69) include a sufficiently rigid central core (74) to serve as a spacer and keep the various spires (11) spaced apart.

## Patentansprüche

**1.** Anlage (1) zur Reinigung irgendwelches organischen, mineralen, wässrigen oder dgl. kristallisierbaren Produkts, umfassend hauptsächlich einen Raffineur (2), der mit einem oder mehreren Wärmeaustäuschern (3) mit spiralförmigen Kammern (20, 21) versehen ist, Anlage (1) dadurch gekennzeichnet, daß jeder der genannten Wärmeaustäuscher (3) einen Modul (30, 31, 32, 33) bildet und als eine Doppelspirale (4) ausgestaltet ist, die mittels zweier Bleche (5, 6) erhalten wird, die so gewunden sind, daß ihre senkrechten Enden (24, 25) Zeugenden (26, 27) gemäß im Bereich des Außenmantels (23) des Wärmeaustauschers (3) angeordnet sind und einer der spiralförmigen Kammern (20) entsprechende Öffnungen (40, 41) bilden und mit außerhalb dieses Wärmeaustauschers (3) befindlichen und von senkrechten Stutzen (38, 39) gebildeten Übertragungsmediumzu- und Abfuhrmitteln (28, 29) zusammenwirken, wobei jeder dieser Module (30, 31, 32, 33) außerdem Verbindungsmittel (34) umfaßt, die es erlauben, sie übereinanderzusetzen, während deren Selbstständigkeit hinsichtlich der Zu- und Abfuhr von kristalliserbaren Produkten behalten bleibt, wobei diese Verbindungsmittel (34) von der Oberfläche (35) und der Unterfläche (36) des Wärmeaustauschers (3) eines kegelförmigen Gestalts (37), zum Erleichtern der Zentrierung eines Moduls bezüglich eines anderen während deren Verbindung, gebildet sind, wobei die genannte Unterfläche (36) mit einem kegelförmigen Boden (55) versehen ist, der einen Umkreiswulst (56) umfaßt, der mit Öffnungen versehen ist, die mit einem Stutzen (57), durch das die Zufuhr, die Abfuhr und die Entleerung des genannten Moduls (30, 31, 32, 33) erfolgt, in Verbindung stehen.

**2.** Anlage (1) nach Anspruch 1, dadurch gekennzeichnet, daß die beiden die Doppelspirale (4) bildenden Bleche (5, 6) im Bereich ihres Mittelteils (7) in einen aus zwei zylindrischen Elementen (8, 10) bestehenden Zentralkern (8) hineingeführt werden, wobei die genannten Bleche (5, 6) um diesen letzten herum gewunden werden.

**3.** Anlage (1) nach Anspruch 2, dadurch gekennzeichnet, daß die Bleche (5, 6) durch Flacheisen (14, 15, 16), die vor dem Winden um den Kern (8) herum zwischen diese letzten hineingeführt werden, von einander beabstandet gehalten werden, wobei sich die genannten Flacheisen (14, 15, 16) waagerecht über die ganze Länge der Bleche (5, 6) erstrecken und über die Höhe dieser letzten so verteilt werden, daß sie innerhalb der Kammer (20) eine Reihe von Kanälen (17) bestimmen, durch die das Übertragungsmedium fließt.

**4.** Anlage nach Ansprüchen 1 und 3, dadurch gekennzeichnet, daß die Stutzen (38, 39) über Verbindungsmittel (42) mit Öffnungen (40, 41) der spiralförmigen Kammer (20) mitwirken und eine Reihe von im wesentlichen über deren ganze Länge angeordneten und mit den Kanälen (17) der genannten Kammer (20) übereinstimmenden Bohrungen (54) umfassen, um das Medium und die Übertragung in dieser letzte zu verteilen.

**5.** Anlage nach Anspruch 1, dadurch gekennzeichnet, daß der Boden (55) an seiner Innenfläche (59) mit Rippen (58) versehen ist, auf denen die spiralförmigen Bleche (5, 6) ruhen, wobei diese Rippen (58) an deren Unterrand (60), zum Befördern der Abfuhr der aus einem Modul (30, 31, 32, 33) fließenden Flüssigkeit, gestanzt sind.

**6.** Anlage nach Anspruch 1, dadurch gekennzeichnet, daß der erste, am Boden der Anlage (1) befindliche Modul (30) auf einem Ständer (45) ruht, der in der Nähe dessen Oberrandes (46), drei rohrförmige, mit den Stutzen (38, 39) sowie mit einem dritten Stutzen (44) verbundene Rippen (47) umfaßt, die die Übertragungsmediumein- und -Ausläße der Module (30, 31, 32, 33) bilden.

**7.** Anlage nach Anspruch 1, dadurch gekennzeichnet, daß sie an ihrem Oberteil (50) einen Deckel (51) umfaßt, der den letzten Modul (33) abdeckt, wobei dieser Deckel (51) mit Mitteln (52) zum Verschließen der Oberenden (53) der Stutzen (38, 39, 44) des genannten Moduls (33) versehen ist.

**8.** Anlage nach Anspruch 1, dadurch gekennzeichnet, daß sie, einerseits, zwischen jedem Modul (30, 31, 32, 33) und, andereseits respektive unterhalb und oberhalb der am Unterteil und am Oberteil der Anlage (1) befindlichen Module (30, 33) ein Wärmeschirm (61) umfaßt.

9. Anlage nach Anspruch 1 8, dadurch gekennzeichnet, daß ein Wärmeschirm (61) aus, einerseits, einem kegelförmigen, auf der Oberfläche (35) eines Wärmeaustauschers (3) oder auf dem Ständer (45) angebrachten Deckel (62) und, andererseits, einem auf der Oberfläche (63) des genannten Deckels (62) angebrachten, als eine Doppelspirale (4) gestalteten Schlangenrohr (64) besteht, wobei dieser Dekkel außerdem einen von einer Lüftungsöffnung (68) durchquerten Umkreiswulst (67) umfaßt.

10. Anlage nach Anspruch 9, dadurch gekennzeichnet, daß ein Ende (65) des Schlangenrohrs (64) mit dem Stutzen (44) eines Moduls (30, 31, 32, 33) verbunden ist, wobei dieser Stutzen (44) den Übertragungsmediumein- und/oder -Auslaß bildet.

11. Anlage nach Anspruch 1, dadurch gekennzeichnet, daß die Kammer (21) des Wärmeaustauschers (3), die dadurch erhalten wird, daß die verschiedenen von den Blechen (5, 6) gebildeten Windungen (11) durch Abstandsstücke (22) oder dgl. beabstandet gehalten werden, mit aus aufgrund deren Wärmewirkung gewählten Profileisen (71, 72, 73) gebildeten Diffusoren (69) versehen ist.

12. Anlage nach Anspruch 11, dadurch gekennzeichnet, daß die die Diffusoren (69) bildenden Profileisen (73) einen Zentralkern (74) umfassen, der zureichend starr ist, um als Abstandsstück zu dienen und die verschiedenen Windungen (11) beabstandet zu halten.

FIG. 1

FIG. 2

FIG. 3

FIG. 4

FIG.5

FIG.7

FIG.8

FIG.9

FIG. 10

FIG. 11